# EUROPÄISCHE PATENTSCHRIFT

(11) **EP 1 606 673 B1**
(45) Veröffentlichungstag und Bekanntmachung des Hinweises auf die Patenterteilung: **29.04.2009**
(21) Anmeldenummer: 04722841.6
(22) Anmeldetag: 24.03.2004
(51) Int. Cl.: G05B 19/042

(54) **VERFAHREN ZUR ÜBERTRAGUNG VON SOFTWARECODE VON EINER STEUEREINHEIT ZU EINEM FELDGERÄT DER PROZESSAUTOMATISIERUNGSTECHNIK**
METHOD FOR TRANSMITTING A SOFTWARE CODE FROM A CONTROL UNIT TO A FIELD DEVICE OF PROCESS AUTOMATION TECHNOLOGY
PROCEDE DE TRANSMISSION D'UN CODE DE LOGICIEL D'UNE UNITE DE COMMANDE A UN APPAREIL DE TERRAIN ASSOCIE A LA TECHNIQUE D'AUTOMATISATION DE PROCESSUS

(30) Priorität: 25.03.2003 DE 10313389
(43) Veröffentlichungstag der Anmeldung: 21.12.2005
(73) Patentinhaber: Endress + Hauser Process Solutions AG, 4153 Reinach BL (CH)
(72) Erfinder: DA SILVA NETO, Eugenio, Ferreira, CH-4105 Biel-Benken (CH)
(74) Vertreter: Andres, Angelika Maria
(86) Internationale Anmeldenummer: PCT/EP2004/003141
(87) Internationale Veröffentlichungsnummer: WO 2004/086156

(56) Entgegenhaltungen:
- US-A- 5 909 368
- FDT JOINT INTEREST WORKING GROUP: "FDT Interface Specification Version 1.2" Mai 2001 (2001-05), FDT JOINT INTEREST GROUP , XP002330295 Gefunden im Internet: URL:http://www.fdt-jig.org/_downloads/04_2 004/FDT_Spec_V12_+_Addendum.zip> Seite 1 - Seite 20
- N.N.: "FDT/DTM Field Device Tool - Offenes Enginerreing für Feldgeräte" September 2001 (2001-09), PROFIBUS INTERNATIONAL SUPPORT CENTER , KARLSRUHE , XP002330296 Gefunden im Internet: URL:http://www.profibus.com/imperia/md/con tent/pisc/brochures/FDT-DTM-Brochure2001-d .pdf> Seite 1 - Seite 6

## Beschreibung

Die Erfindung betrifft ein Verfahren zur Übertagung von Softwarecode von einer Steuereinheit zu einem Feldgerät der Prozessautomatisierungstechnik gemäß dem Oberbegriff des Anspruchs 1.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmesser, Massendurchflussmessgeräte, Druck- und Temperaturmessgeräte etc., die als Sensoren die entsprechende Prozessvariablen Füllstand, Durchfluss, Druck bzw. Temperatur erfassen.

Zur Beeinflussung von Prozessvariablen dienen sogenannte Aktoren z. B. Ventile, die den Durchfluss einer Flüssigkeit in einem Rohrleitungsabschnitt oder Pumpen, die den Füllstand in einem Behälter verändern.

Eine Vielzahl solcher Feldgeräte wird von der Fa. Endress+Hauser hergestellt und vertrieben.

In der Regel sind die Feldgeräte über einen Feldbus (Profibus®, Foundation® Fieldbus, etc.) mit Leitsystemen oder Steuereinheiten verbunden. Diese dienen zur Prozesssteuerung, Prozessvisualisierung, Prozessüberwachung sowie zur Konfigurierung und Parametrierung der Feldgeräte.

Die Feldgeräte führen verschiedene Funktionen innerhalb der Prozesssteuerung aus. Für spezielle Standardfunktionen stehen sogenannte Funktionsblöcke mit definierten Kommunikationsschnittstellen zur Verfügung. Diese Funktionsblöcke bilden mit entsprechenden Algorithmen, die in den Mikroprozessoren der einzelnen Feldgeräte abgearbeitet werden, spezielle Anwendungsfunktionen. Feldgeräte mit Mikroprozessoren werden auch als intelligente Feldgeräte oder smart field devices bezeichnet.

Ein wesentlicher Aspekt der Funktionsblöche besteht darin, dass sie definierte Schnittstellen aufweisen und damit von relativ einfachen bis hin zu komplexen Kontrollstrategien, die zwischen verschiedenen Feldgeräten aufgeteilt sind, verknüpft werden können.

In den Foundation Fieldbus Spezifikationen, die öffentlich zugänglich sind, sind verschiedene Standardfunktionsblöcke spezifiziert. Typische Funktionsblöcke für Feldgeräte sind, "Analog Input", "Analog Output", "Discret Input", Discret Output", "PID-Control". Neben diesen Basis-Funktionsblöcken gibt es noch spezielle Funktionsblöcke "Analog Alarm", "Arithmetic", Device Control".

Seit neuerem sind auch flexible Funktionsblöcke (Flexible Function Blocks) von der Foundation Fieldbus spezifiziert, die frei nach der IEC-Norm 61131 programmierbar sind (z. B. Supervisory Data Acquisation).

Weiterhin wird auch auf die IEC-Norm 61158 verwiesen, in der neben verschiedenen Feldbus-Systemen auch die Foundation® Fieldbus-Technologie spezifiziert ist.

Um Funktionsblöcke zu verändern, muss der entsprechende Softwarecode im Speicher des Feldgerätes ausgetauscht werden. Dies erfolgt meist dadurch, dass das entsprechende Speicherelement (EEPROM) ausgetauscht wird. Eine andere Möglichkeit besteht darin, den neuen Programmteil (d.h. den neuen Softwarecode) über eine am Feldgerät vorgesehene Service-Schnittstelle z. B. von einem Laptop zu übertragen. Hierfür werden jedoch herstellerspezifische Spezial-Programme sogenannte (Software-) Tools benötigt. In der Regel sind auch die Übertragungsprotokolle proprietär.

Bevor ein Feldgerät eingesetzt werden kann muss es konfiguriert und parametriert werden. Hierfür ist u.a. das Laden der Kontrollstrategie in die entsprechenden Feldgeräte notwendig.

Eine bekannte Applikation, die dies ermöglicht, ist das System SYSCON (Fa. SMAR). Mit dieser Applikation kann auch das korrekte Verschalten der einzelnen Funktionsblöcke sowie der zeitliche Ablauf der Kontrollstrategie getestet werden.

US 5,909,368 beschreibt ein Prozesssteuersystem, das sich der Prozesssteuerstrategie bedient, dass die Steuerung unter einer Vielzahl von Controllern, Steuereinheiten und Feldgeräten aufgeteilt ist. Ein Anwender definiert die Steuerstrategie über eine Architektur einer Vielzahl von Funktionsblöcken und Steuermodulen und das Laden anwenderspezifischer Teile der Steuerstrategie in die Feldgeräte.

In der Prozessautomatisierungstechnik werden vielfach Feldgeräte unterschiedlicher Hersteller eingesetzt, für deren vollständige Parametrierung und Konfigurierung herstellerspezifische Bedienprogramme, die allgemein auch als Tools bezeichnet werden, das sind Bedienprogramme (z.B. CommuWin®, Fa. Endress+Hauser), die auf Rechnereinheiten wie z.B. Workstations oder Laptops ablaufen, notwendig sind.

Um ein einheitliches Bedienen von Feldgeräten unterschiedlicher Hersteller zu ermöglichen wurde von der Profibus® Nutzerorganisation ein Industriestandard, FDT (Field Device Tool)- Spezifikationen, geschaffen.

Die Gerätehersteller liefern zu ihren Feldgeräten gerätespezifische Softwaremodule DTMs (Device Type Manager), die alle Daten und Funktionen des jeweiligen Feldgerätes kapseln und gleichzeitig grafische Bedienelemente liefern. Zur Ausführung benötigen der DTMs als Laufzeitumgebung (runtime environment) eine FDT-Frame Anwendung (FDT-Container). Hierbei kann es sich um ein einfaches Bedienprogramm (Konfigurier-Tool) oder um eine Leitsystemanwendung (Engineering Tool) handeln.

Die FDT-Spezifikationen legen nur die Schnittstellen nicht aber deren Implementierung fest.

Die zugrundeliegende Software-Architektur basiert auf der Microsoft COM/DCOM Technologie. DTMs werden als COM Komponenten (COM-.Server) realisiert und sind die Softwareschnittstellen über die die FDT-Frame Anwendung (FDT-Client) Zugang zum physikalischen Feldgerät erhält. Die graphischen Bedienelemente sind als Microsoft ActiveX Controls realisiert. Über diese graphischen Schnittstellen erhält der Nutzer einen einfachen Zugang zum physikalischen Feldgerät.

Neben den Feldgeräten müssen auch noch weitere Geräte in die FDT-Frame Anwendung eingebunden werden. Diese Geräte, die Kommunikationsaufgaben übernehmen wie z.B. Gateways, Feldbusadapter, benötigen sogenannte Kommunikations- DTMs.

Ein Kommunikations- DTM (CommDTM) enthält alle Kommunikationsfunktionen und Dialoge, über die man die Parameter der Netzwerk bzw. Bus-Anschaltung beeinflussen und aktivieren kann. Diese Elemente sind standardmäßig ebenfalls als ActiveX-Controls implementiert. Der CommDTM ersetzt bei der standardisierten FDT-Schnittstelle die heute übliche herstellerspezifische Konfigurationssoftware einer Netzwerk bzw. Feldbus-Anschaltung.

Der Kommunikationskanal CommChannel entspricht den Treiber-Bibliotheken.

Heutzutage benötigt man zum Bedienen und Konfigurieren von Feldgeräten und zum Ändern von Softwarecode in Feldgeräten unterschiedliche herstellerspezifische Programme (Tools).

Insbesondere das Ändern von Softwarecode in Feldgeräten ist sehr aufwendig und kann in der Regel nur von einem Techniker vor Ort direkt am Feldgerät vorgenommen werden. Das hierfür benötigte Programm muss aufwendig erzeugt und getestet werden.

Weist die Prozessautomatisierungsanlage des Anwenders Feldgeräte unterschiedlicher Hersteller auf, so sind unterschiedliche Bedienprogramme und unterschiedliche Programme zum Ändern von Softwarecode notwendig.

Dies ist für den Anwender äußerst unbefriedigend.

Aufgabe der Erfindung is es deshalb, ein Verfahren zum Übertragen von Softwarecode von einer Rechnereinheit zu einem Feldgerät der Prozessautomatisierungstechnik anzugeben, das einfach und kostengünstig durchgeführt werden kann.

Gelöst wird diese Aufgabe durch die in Verfahren 1 angegebenen Verfahrensschritte.

Die wesentlich Idee der Erfindung besteht darin, den Softwarecode, der im Feldgerät geladen werden soll, in ein Softwaremodul zu integrieren, das verschiedene Daten und Funktionen des Feldgerätes kapselt und das als Laufzeitumgebung ein Bedienprogramm für Feldgeräte benötigt. Über das Bedienprogramm kommuniziert das Softwaremodul mit dem Feldgerät. Das Softwaremodul stellt im wesentlichen den Software-Treiber für das Feldgerät mit allen gerätespezifischen Funktionen und Dialogen sowie der Benutzeroberfläche für Parametrierung, Konfigurierung, Diagnose und Wartung dar.

In einer Weiterentwicklung der Erfindung handelt es sich bei dem Softwaremodul um ein DTM (Device Type Manager) und bei dem Bedienwerkzeug um eine FDT- Frame Applikation, die beide den FDT-Spezifikationen entsprechen.

In einer Weiterentwicklung der Erfindung handelt es sich bei dem Softwarecode um einen Funktionsblock. Dieser Funktionsblock kann z. B. nach dem Foundation® Fieldbus Spezifikationen ausgebildet sein.

Ein derartiger Funktionsblock enthält u.a. die Algorithmen, die Parameter und Methoden für das jeweilige Feldgerät.

Dadurch dass beim Übertragen eines Funktionsblocks in ein Feldgerät dieses erheblich manipuliert werden kann, sind Sicherheitsmechanismen notwendig, die eine Virusattacke auf das Feldgerät verhindern.

In einer Weiterentwicklung der Erfindung ist im Feldgerät eine Shell-Applikation installiert, die die Ausführung des Funktionsblock, der ins Feldgerät übertragen werden soll, im Feldgeräte ermöglicht.

Nachfolgend ist die Erfindung anhand eines in der Zeichnung dargestellten Ausführungsbeispiels näher erläutert. Es zeigen:
Fig. 1 Netzwerk der Prozessautomatisierungstechnik in schematischer Darstellung;
Fig. 2 FDT-Frame-Applikation mit Verbindung zu einem Feldgerät in schematischer Darstellung.

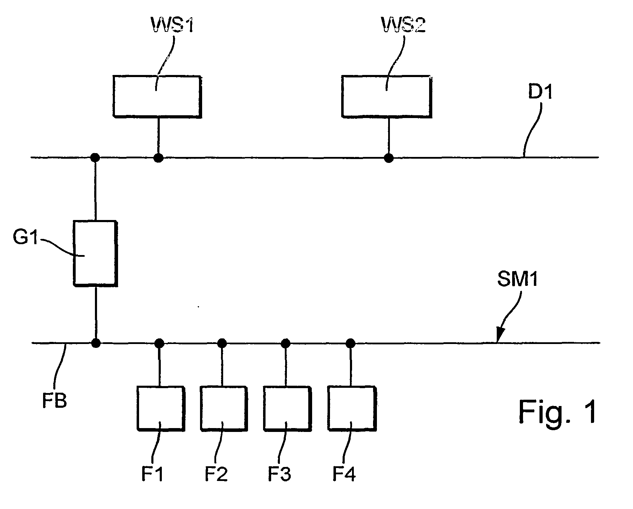

In Fig. 1 ist ein Netzwerk der Prozessautomatisierungstechnik näher dargestellt. An einen Datenbus D1 sind mehrere Leistsystemen bzw. Steuereinheiten (Workstations) WS1, WS2, die zur Prozessvisualisierung, Prozessüberwachung und zum Engineering dienen, angeschlossen. Der Datenbus D1 arbeitet z.B. nach dem HSE(High Speed Ethernet)-Standard der Foundation® Fieldbus. Über ein Gateway G1, das auch als Linking Device bezeichnet wird, ist der Datenbus D1 mit einem Feldbussegment SM1 verbunden. Das Feldbussegment SM1 besteht aus mehreren Feldgeräten F1, F2, F3, F4, die über einen Feldbus FB miteinander verbunden sind. Der Feldbus FB arbeitet nach dem Foundation Fieldbus Standard.

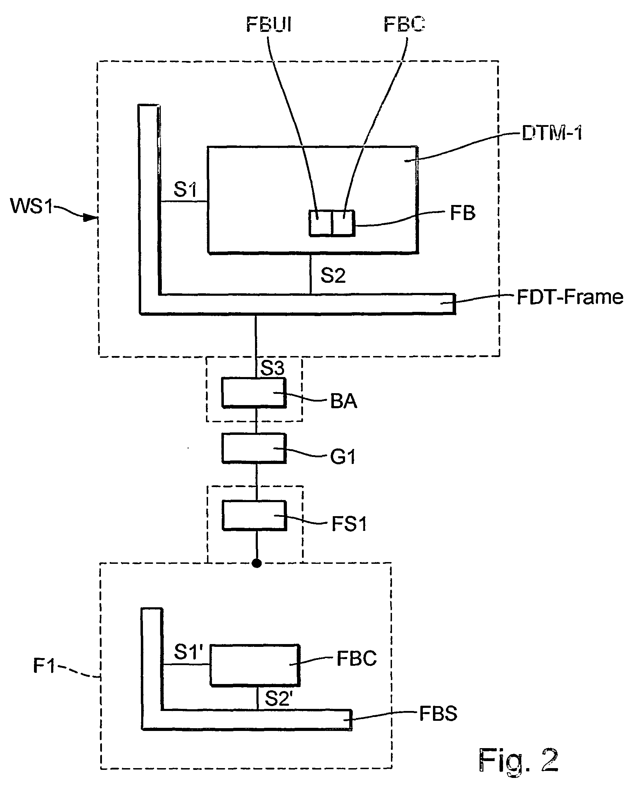

In Fig. 2 ist eine FDT- Frame Applikation, die auf einer der Steuereinheiten WS1, bzw. WS2 abläuft, schematisch dargestellt. Bei der FDT Frame Applikation kann es sich um das Bedienprogramm PACTware® (PACTware Consortium e.V.) oder FieldCare® (Fa. Endress+Hauser) handeln, die eine Windows® Umgebung benötigen. Die FDT-Frame Applikation ist verantwortlich für die Projektdatenbank (poject database), die Kommunikation zu den Bus-Systemen, die Verwaltung des Feldgeräte-Katalogs, die Verwaltung der Benutzer und Zugriffsrechte etc.

Über verschiedenen Schnittstellen S1, S2 (gemäß FDT-Spezifikationen) erfolgt eine Einbindung des Softwaremoduls DTM-1, das als DTM ausgebildet ist. Der DTM-1 kapselt die Daten und Funktionen des Feldgeräts F1 und benötigt als Laufzeitumgebung die FDT-Frame Applikation. Er ermöglicht den Zugriff auf Geräteparameter (Online und Offline), die Gerätebedienung und Konfiguration, die Diagnose des Gerätestatus und eine herstellerspezifische Gerätebedienung mit entsprechendem Look and Feel.

Er liefert auch graphische Elemente für die Bedienung der Feldgeräte als eigenständige Windows® Applikationen.

Gemäß dem FDT-Konzept können in die FDT-Frame Applikation verschiedenen DTMs unterschiedlicher Hersteller eingebunden werden.

Über eine Schnittstelle S3 kommuniziert die FDT-Frame Applikation mit dem Feldgerät F1. Die Hardware-mäßige Verbindung erfolgt über eine Bus-Anschaltung BA, den Datenbus D1, das Gateway G1, den Feldbus und die Feldbus-Schnittstelle FS1.

In den DTM-1 ist zusätzlich ein Funktionsblock FB integriert. Der Funktionsblock FB besteht aus einem Funktionsblock-User-Interface FBUI und dem eigentlichen Funktionsblock-Softwarecode FBC. Der Softwarecode des Funktionsblock FB ist als Function Block gemäß den Foundation® Fieldbus Spezifikationen ausgebildet.

Dieser Funktionsblock umfasst z.B. Algorithmen, Parameter oder Methoden des Feldgeräts F1.

Über das Funktionsblock-User-Interface FBUI können insbesondere die Parameter des Funktionsblocks verändert werden.

Nachfolgend ist die Funktionsweise der Erfindung näher erläutert. Parameterwerte können in einfacher und bekannter Weise von der Steuereinheit z. B. WS1 zu den Feldgeräten F1, F2, F3, F4 übertragen werden. Zuerst wird die Kommunikationsverbindung zum physikalischen Gerät hergestellt. FDT stellt hierfür die entsprechenden Kommunikationskanäle CommChannels zur Verfügung. Nach dem Aufbau der Kommunikationsverbindung wird der Softwarecode FBC von der Steuereinheit z.B. WS1 in entsprechender Weise zum Feldgerät F1 übertragen, wie z.B. herkömmliche Parameterwerte. Der Verbindungsaufbau und die Kommunikation zum physikalischen Gerät ist bereits Bestandteil der FDT-Spezifikationen.

Zur Ausführung des Softwarecodes im Feldgerät F1 ist eine Function Block Shell mit entsprechenden Schnittstellen S1',S2' vorgesehen. Die Function Block Shell stellt ein Application Programm Interface zwischen Feldbus-Stack und Funktionsblock-Anwendungen dar.

Zur Vermeidung der Übertragung von herstellerfremden Softwarecode ins Feldgerät, ist in der Function Block Shell vorgesehen, die Authentizität des DTMs zu überprüfen. Nur vom Hersteller zertifizierten DTMs ist es erlaubt, Softwarecode in seine Feldgeräte zu übertragen. Somit wird vermieden, dass fehlerhafter oder virusverseuchter Softwarecode ins Feldgerät gelangen kann.

Für die Übertragung von Softwarecode FBC zu Feldgeräten ist kein herstellerspezifisches Programm mehr notwendig. Ein Standard-Bedienprogramm ist hierfür ausreichend. Mit einem Bedienprogram, der FDT-Frame Applikation, kann in Feldgeräten unterschiedlicher Hersteller, Softwarecode geändert werden. Diese Änderungen können vom Anwender problemlos durchgeführt werden. Hierfür muss nur der vom Hersteller des Feldgerätes bereitgestellte DTM mit dem geänderten Softwarecode in die Steuereinheit geladen werden und über einen entsprechenden Bildschirm-Befehl "Software Update durchrühren" eingeleitet werden.

## Patentansprüche

1. Verfahren zum Übertragen von Softwarecode (FBC) von einer Steuereinheit (WS1) zu einem Feldgerät (F1) der Prozessautomatisierungstechnik, **dadurch gekennzeichnet, dass**
der Softwarecode (FBC) in ein Softwaremodul (DTM), das Daten und Funktionen des Feldgerätes (F1) kapselt und als Laufzeitumgebung ein Bedienprogramm (FDT Frame) für Feldgeräte (F1, F2, F3, F4) benötigt, integriert wird,
wobei von dem Bedienprogramm (FDT Frame) eine Kommunikationsverbindung zu dem Feldgerät (F1) hergestellt wird,
wobei der Softwarecode (FBC) über die Kommunikationsverbindung in das Feldgerät (F1) übertragen wird,
wobei der Softwarecode (FBC) im Feldgerät (F1) über eine Function Block Shell (FBS) ausgeführt wird, die ein Application Program Interface zwischen Feldbus-Stack und Funktionsblock-Anwendungen darstellt.

2. Verfahren nach Anspruch 1,
wobei die Authentizität des Softwaremoduls (DTM) mit der Function Block Shell (FBS) überprüft wird.

3. Verfahren nach Anspruch 1,
wobei als Softwaremodul (DTM) ein Device Type Manager und als Bedienprogramm die FDT-Frame-Applikation (FDT-FRAME) verwendet wird, die beide den FDT-Spezifikationen entsprechen.

4. Verfahren nach einem der vorhergehenden Ansprüche,
wobei der Softwarecode als Funktionsblock (FB) ausgestaltet ist.

5. Verfahren nach Anspruch 3,
wobei der Funktionsblock (FB) als Function Block gemäß den Foundation® Fieldbus Spezifikationen ausgebildet ist.

6. Verfahren nach einem der vorhergehenden Ansprüche 4 oder 5,
wobei in den Funktionsblock (FB) Algorithmen, Parameter oder Methoden des Feldgeräts (F1) integriert werden.

7. Verfahren nach Anspruch 4, 5 oder 6,
wobei die Parameter des Funktionsblocks (FB), der aus einem Funktionsblock-User-Interface (FBUI) und dem eigentlichen Funktionsblock-Softwarecode (FBC) besteht, über das Funktionsblock-User-Interface (FBUI) verändert werden.

## Claims

1. Process for transmitting software code (FBC) from a control unit (WS1) to a process automation field device (F1), **characterized in that** the software code (FBC) is integrated in a software module (DTM) that encapsulates data and functions of the field device (F1) and requires an operating program (FDT Frame) for field devices (F1, F2, F3, F4) as the runtime environment, where a communication connection to the field device (F1) is established by the operating program (FDT Frame), and where the software code (FBC) is transmitted to the field device (F1) via the communication connection, and where the software code (FBC) in the field device (F1) is executed via a Function Block Shell (FBS) which constitutes an application program interface between the fieldbus stack and function block applications.

2. Process as per Claim 1, where the authenticity of the software module (DTM) is checked by the Function Block Shell (FBS).

3. Process as per Claim 1, where a device type manager is used as the software module (DTM) and the FDT Frame application (FDT-Frame) is used as the operating program, and both meet the FDT specifications.

4. Process as per one of the previous claims, where the software code is designed as a function block (FB).

5. Process as per Claim 3, where the function block (FB) is designed as a function block in accordance with the Foundation® Fieldbus specifications.

6. Process as per one of the previous Claims 4 or 5, **characterized in that** algorithms, parameters or methods of the field device (F1) are integrated in the function block (FB).

7. Process as per Claim 4, 5 or 6, **characterized in that** the parameters of the function block (FB), which consists of a function block user interface (FBUI) and the actual function block software code (FBC), are modified by means of the function block user interface (FBUI).

## Revendications

1. Procédé destiné au transfert du code logiciel (FBC) d'une unité de commande (WS1) vers un appareil de terrain (F1) de la technique d'automatisation des processus, **caractérisé en ce que**
le code logiciel (FBC) est intégré dans un module logiciel (DTM), qui encapsule les données et les fonctions de l'appareil de terrain (F1) et nécessite comme environnement temps réel un programme de service (FDT Frame) pour les appareils de terrain (F1, F2, F3, F4),
une liaison de communication étant établie par le programme de service (FDT Frame) avec l'appareil de terrain (F1),
le code logiciel (FBC) étant transféré dans l'appareil de terrain (F1) par le biais de la liaison de communication,
le code logiciel (FBC) étant exécuté dans l'appareil de terrain (F1) à travers un shell de blocs fonctionnels (FBS), qui constitue une interface de programme d'application entre la pile du bus de terrain et les applications de bloc fonctionnel.

2. Procédé selon la revendication 1,
pour lequel l'authenticité du module logiciel (DTM) est contrôlée à l'aide du shell de blocs fonctionnels (FBS).

3. Procédé selon la revendication 1,
pour lequel est utilisé comme module logiciel (DTM) un "Device Type Manager" et comme programme de service l'application FDT Frame, qui sont tous deux conformes aux spécifications FDT.

4. Procédé selon l'une des revendications précédentes,
pour lequel le code logiciel est conçu en tant que bloc fonctionnel (FB).

5. Procédé selon la revendication 3,
pour lequel le bloc fonctionnel (FB) est conçu en tant que "Function Bloc" conformément aux spécifications Foundation® Fieldbus.

6. Procédé selon l'une des revendications 4 ou 5 précédentes,
pour lequel des algorithmes, des paramètres ou des méthodes de l'appareil de terrain (F1) sont intégrés dans le bloc fonctionnel.

7. Procédé selon la revendication 4, 5 ou 6,
pour lequel les paramètres du bloc fonctionnel (FB), lequel se compose d'une interface utilisateur de bloc fonctionnel (FBUI) et du code logiciel de bloc fonctionnel (FBC) proprement dit, sont modifiés par l'intermédiaire de l'interface utilisateur de bloc fonctionnel (FBUI).
